Europäisches Patentamt

European Patent Office

Office européen des brevets

(19)

(11) Numéro de publication : **0 013 524**
**B1**

(12)

# FASCICULE DE BREVET EUROPÉEN

(45) Date de publication du fascicule du brevet :
**28.11.84**

(21) Numéro de dépôt : **79401048.8**

(22) Date de dépôt : **20.12.79**

(51) Int. Cl.³ : **G 01 S   1/70**, **G 05 D   1/06**

(54) **Procédé d'aide au pilotage et à l'atterrissage d'un aérodyne.**

(30) Priorité : **09.01.79 FR 7900441**

(43) Date de publication de la demande :
**23.07.80 Bulletin 80/15**

(45) Mention de la délivrance du brevet :
**28.11.84 Bulletin 84/48**

(84) Etats contractants désignés :
**BE DE IT SE**

(56) Documents cités :
**DE-A- 1 431 253**
**US-A- 2 366 939**
**US-A- 3 776 455**
**IBM TECHNICAL DISCLOSURE BULLETIN, vol. 16,
no. 1, juin 1973, New York, US, E.J. KROMAN:
"Sensor mounted inertial measurement system",
pages, 61, 62**

(73) Titulaire : **SOCIETE FRANCAISE D'EQUIPEMENTS
POUR LA NAVIGATION AERIENNE (S.F.E.N.A.)**
**B.P. 59 Aérodrome de Villacoublay**
**F-78140 Velizy Villacoublay (FR)**

(72) Inventeur : **Gautier, Bernard**
**10, avenue Scribe**
**F-92190 Meudon (FR)**

(74) Mandataire : **Flavenot, Bernard**
**Société S.E.D.I.C. 40, rue Victor-Basch**
**F-92120 Montrouge (FR)**

Jouve, 18, rue St-Denis, 75001 Paris, France

## Description

La présente invention concerne un procédé d'aide au pilotage et atterrissage d'un aérodyne tel qu'un hélicoptère ou un avion, notamment pendant la phase d'approche et d'atterrissage.

Elle a plus particulièrement pour objet, mais non exclusivement, un procédé et un dispositif permettant à l'aérodyne d'effectuer un atterrissage de nuit ou par mauvaise visibilité.

On sait qu'à l'heure actuelle, pour parvenir à ce résultat, il existe de nombreux procédés tels que par exemple :

— le procédé G.C.A. (Ground Controlled Approach) selon lequel toute la manœuvre d'approche est dirigée du sol par radio, l'aérodyne ne comportant aucun équipement particulier, et

— le procédé I.L.S. (Instrument Landing System) faisant intervenir d'une part, une installation au sol qui matérialise l'axe de descente par l'intersection de deux radio-alignements plans, à savoir le « runway localizer » qui balise le plan vertical passant par l'axe de la piste et le « glide path » qui balise un plan incliné et assure le guidage en pente de l'aérodyne, et, d'autre part, dans l'aérodyne, un dispositif permettant d'indiquer les écarts en azimuth et en site de manière à ce que le pilote (ou le pilote automatique) puisse manœuvrer pour se maintenir sur l'axe de descente.

Il existe notamment un autre moyen pour définir l'axe de descente, et notamment il est illustré par le brevet américain n° 2.366.939, dans lequel cet axe est défini de façon optique au moyen d'un faisceau lumineux divergent, l'axe étant plus particulièrement l'axe optique de propagation.

Il est clair que ces procédés sont utilisables uniquement dans le cas où l'on désire atterrir en des emplacements, tels que des aérodromes spécialement équipés à cet effet.

Par contre, en raison des installations qu'ils font intervenir, ils ne conviennent pas à certaines applications telles que les applications militaires (atterrissage en territoire ennemi) ou même dans certaines applications civiles et en particulier dans le cas de l'atterrissage d'hélicoptères qui, à l'inverse des avions de type courant, ont la possibilité d'atterrir ailleurs que sur des terrains d'atterrissage spécialement aménagés.

L'invention a donc tout d'abord pour but de supprimer cet invonvénient en ne faisant appel, au cours de la phase d'approche et d'atterrissage à aucune installation fixe au sol, et ce, tout en conservant tous les avantages des procédés classiques, auxquels les pilotes sont habitués, et en particulier, du procédé ILS.

Par ailleurs, on sait qu'à l'heure actuelle, de nombreux véhicules à vocation militaire sont équipés de systèmes de visée, pour l'observation, le tir ou même pour le guidage de missiles.

Ces systèmes de visée permettent en général de relever la position de l'objectif observé par rapport au véhicule, en indiquant notamment le gisement et le site angulaire de la ligne de visée.

Dans de nombreux cas, on utilise des systèmes de visée comprenant un détecteur directionnel de rayonnement infrarouge servant à détecter les émissions d'une source d'infrarouge et fournissant l'écart entre la ligne de visée et la source d'infrarouge.

Ainsi, dans le cas où la source d'infrarouge constitue la cible que l'on désire atteindre, un système d'asservissement règle en permanence l'orientation du détecteur sur la source, tandis que les informations correspondant à cette orientation sont utilisées pour régler le tir.

Dans le cas où la source d'infrarouge est disposée à l'arrière d'un missile que l'on désire téléguider, on peut effectuer, à partir des informations relatives au détecteur, la télécommande des gouvernes du missile de manière à le maintenir dans l'axe du détecteur. Celui-ci est par ailleurs constamment maintenu orienté sur l'objectif à atteindre au moyen d'un système de visée maintenu axé en permanence sur ledit objectif.

Ainsi, pour éviter une redondance des équipements existants sur l'aérodyne, l'invention propose d'utiliser, pour l'approche et l'atterrissage de l'aérodyne, de nuit ou par mauvaise visibilité, selon une procédure analogue à celle du procédé ILS, les informations délivrées par un système de visée et de guidage à infrarouge, du type de ceux précédemment décrits.

Plus précisément, la présente invention a pour objet au procédé d'aide au pilotage pour l'approche et l'atterrissage d'un aérodyne en un point, et suivant une direction, et de pente d'atterrissage, ledit aérodyne ayant un axe de propagation, caractérisé par le fait qu'il consiste à déterminer, à un moment donné, quand l'aérodyne est à une certaine distance du point d'atterrissage préalablement déterminé par une source infrarouge disposée au sol, dans un premier plan (par exemple horizontal), d'une part, la valeur d'un premier angle que font les projections dans ce plan de la direction de propagation de l'aérodyne, et la projection de la direction d'atterrissage et, d'autre part, la valeur d'un second angle que font les projections dans ce premier plan d'un axe passant constamment par le point d'atterrissage de l'aérodyne, et la direction d'atterrissage et, dans un second plan non confondu avec le premier (par exemple vertical) la valeur d'un troisième angle que font entre elles les projections dans ce second plan d'axe et une pente prédéterminée d'atterrissage par rapport à un axe horizontal, et la valeur d'un quatrième angle que font entre elles les projections dans ce second plan de la direction de propagation de l'aérodyne, et la direction de la pente prédéterminée, et à partir de ce moment, à agir sur les commandes de l'aérodyne pour amener toutes les valeurs respectives desdits premier, second, troisième et quatrième angles à une valeur nulle.

Un mode de réalisation de l'invention sera décrit ci-après à titre d'exemple non limitatif, avec référence aux dessins annexés dans lesquels :

les figures 1 et 2 sont deux représentations schématiques permettant de mettre en relief les principaux paramètres d'un hélicoptère, dans le plan vertical (figure 1) et dans le plan horizontal (figure 2),

la figure 3 représente un schéma bloc d'un système de pilotage selon l'invention.

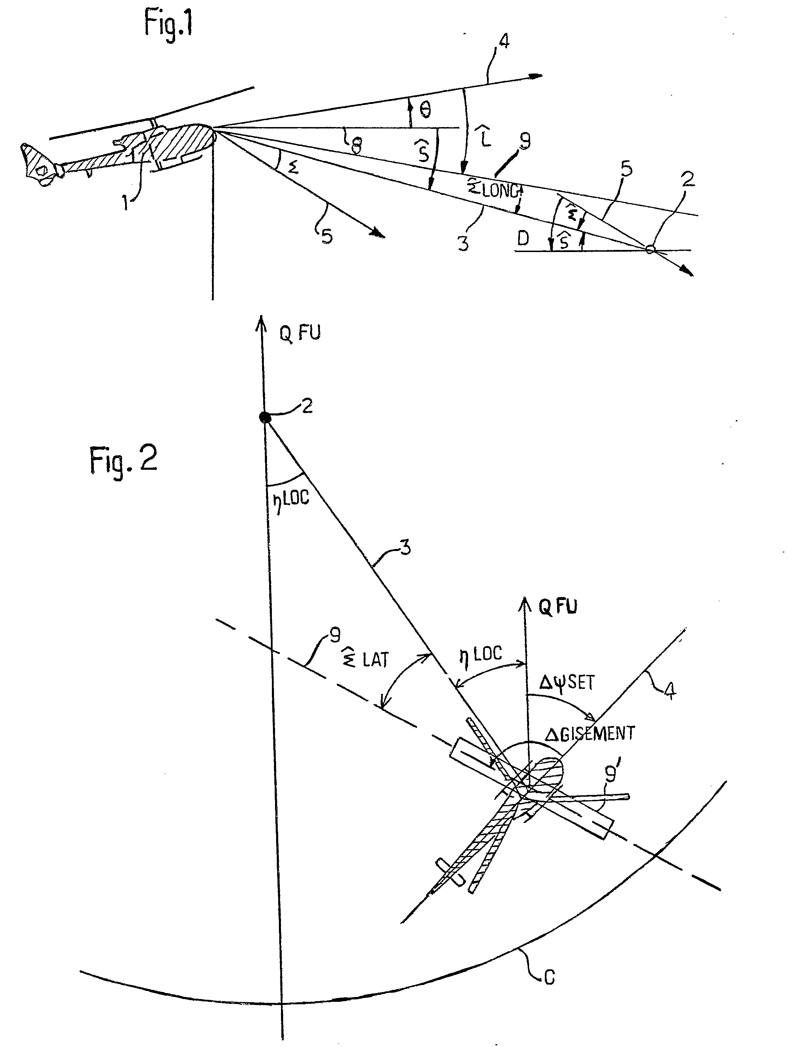

Il convient tout d'abord de préciser que l'hélicoptère 1 représenté figures 1 et 2 est muni d'un système de visée maintenu axé sur une source ponctuelle d'émission de rayonnement d'infrarouge 2 préalablement disposée, voire même larguée à l'emplacement où est prévu l'atterrissage.

Ce système de visée peut avantageusement consister en celui dont est équipé l'hélicoptère pour le tir ou même le guidage de missiles (par exemple de missiles air-sol antichar).

On rappelle que de tels systèmes sont en général gyrostabilisés (c'est-à-dire fixes par rapport à un repère inertiel). Un dispositif d'asservissement fait précessionner les gyromètres en vue de maintenir en permanence la source ponctuelle dans l'axe de visée 3. Ils comprennent aussi un équipement pour la détermination de la direction de l'axe de visée 3 dans un système de coordonnées lié à l'hélicoptère 1. Il est donc possible par une projection classique d'en déduire les angles $\hat{L}$ et $\hat{\Delta}$, gisement que fait l'axe du détecteur infrarouge avec l'axe 4 de l'hélicoptère et ce, respectivement dans les plans verticaux et horizontaux.

Ainsi, le pilotage de l'hélicoptère, en vue de l'approche et de l'atterrissage en un point matérialisé par la source de rayonnement infrarouge 2 préalablement déposée ou larguée en un emplacement choisi, selon une pente prédéterminée 5, par exemple de 3° et selon un cap magnétique déterminé, appelé ci-après QFU, peut s'établir comme suit :

La première phase consiste à amener l'hélicoptère 1 à une distance prédéterminée (cercle C) de la source d'émission d'infrarouge en utilisant les systèmes de pilotage existants à bord. Cette distance C doit nécessairement être choisie dans les limites de la portée du système de visée d'infrarouge équipant l'hélicoptère.

Une fois que l'hélicoptère 1 est parvenu à une distance voisine de celle précédemment mentionnée, on procède alors à la détection de la source d'émission infrarouge 2 au moyen du système de visée. Une fois cet objectif atteint, grâce à son système d'asservissement qui est alors enclenché, le calculateur 6 maintient la source infrarouge 2 dans la ligne de visée 3 du système de visée en faisant précessionner les gyroscopes en vue de réduire à zéro l'écart entre la ligne de visée 3 et ladite source 2.

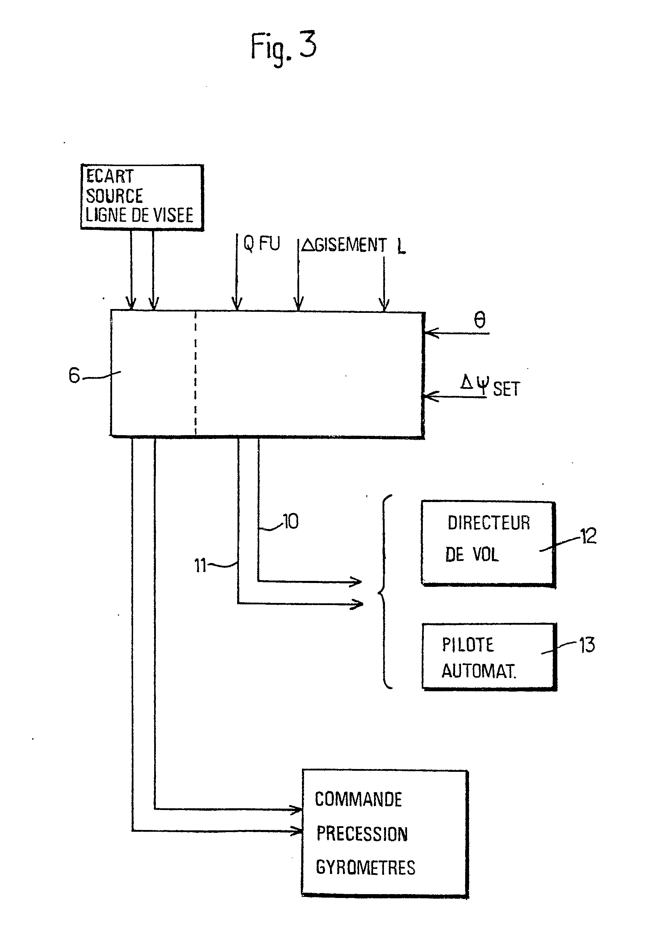

Dès lors, les informations relatives au gisement et au site de la ligne de visée ainsi que les écarts entre la ligne de visée 3 et la source d'infrarouge fournis par des capteurs associés au système de visée sont transmis au calculateur 6 (figure 3) destiné à élaborer d'une part, un signal $\eta$Loc (comparable au signal communément appelé « écart loc » dans le procédé I.L.S.) qui consiste en l'angle formé par la ligne de visée 3 du système de visée (lorsqu'elle passe par la source d'émission infrarouge) et le cap magnétique d'approche QFU que l'on s'est fixé, et, d'autre part, un signal d'erreur comparable au signal communément appelé « écart glide » dans le procédé I.L.S., qui est l'angle formé par la ligne de visée 3 et la pente du plan de descente 5 que l'on s'est également fixé.

Il est clair, que si l'on agit sur les commandes de vol de manière à réduire à zéro le signal d'erreur $\varepsilon$ et le signal $\eta$Loc, dans une première phase, l'hélicoptère effectuera la capture de l'axe de descente 5 qui, par définition, passe par la source d'émission d'infrarouge 2 et présente une pente D, déterminée et un cap magnétique QFU, puis se maintiendra ensuite sur l'axe de descente 5.

A cet effet, dans le cadre d'un pilotage manuel les informations relatives à l'« écart Loc » et à l'« écart glide » peuvent être affichées au moyen d'un directeur de vol qui indique au pilote les tendances de l'hélicoptère et, en conséquence, les manœuvres qu'il doit effectuer en vue de réduire à zéro lesdits signaux $\hat{\varepsilon}$ et $\eta$Loc.

Par contre, dans le cadre d'un pilotage automatique les signaux $\hat{e}$ et $\eta$Loc sont transmis à un pilote automatique qui asservit les commandes de vol de manière à obtenir un résultat identique.

D'une façon plus précise le signal d'erreur $\hat{\varepsilon}$ est obtenu en effectuant la somme algébrique :

$$\hat{\varepsilon} = \hat{\theta} + \hat{L} + \hat{D} + \hat{\varepsilon}\text{long}$$

dans laquelle

$\hat{\theta}$ est l'assiette de l'hélicoptère (angle formé par l'axe 4 de l'hélicoptère 1 et de l'horizontale 8), cette grandeur étant fournie par une centrale de verticale équipant de façon classique l'hélicoptère.

$\hat{L}$ est l'angle formé par l'axe 4 de l'hélicoptère 1 et l'axe 9 du système de visée, cette valeur étant obtenue au moyen d'un détecteur, par exemple un potentiomètre associé au système de visée.

$\hat{D}$ est l'angle formé par le plan de descente 5 et l'horizontale 8, cette valeur étant prédéterminée et devant être affichée par le pilote au départ de la procédure d'approche et d'atterrissage.

$\hat{\varepsilon}$ long est l'angle formé par l'axe 9 du système de visée et la ligne de visée 3, projeté sur le plan vertical.

Par ailleurs, le signal $\eta$Loc s'obtient en faisant la somme algébrique :

$$\eta\hat{L}\text{oc} = \hat{\Delta}\text{Gisement} + \hat{\varepsilon}\hat{L}\text{at} = \Delta\psi\text{Set}$$

dans laquelle :

$\hat{\Delta}$ Gisement est l'angle formé par l'axe 4 de l'hélicoptère et l'axe 9 du système de visée 9'.

$\hat{\varepsilon}$ Lat est l'angle formé par l'axe 9 du système de visée et la ligne de visée 3, projeté sur le plan horizontal.

ΔψSet est l'angle formé par l'axe 4 de l'hélicoptère et le cap magnétique d'approche QFU.

Avec référence à la figure 3 l'élaboration de l'« écart Loc » équivalent et de l'« écart glide » équivalent (sorties 10 et 11) est obtenue au moyen du calculateur qui reçoit les informations :

du cap magnétique d'approche QFU
de l'angle ΔGisement
de l'angle ΔSite
de l'assiette de tangage θ̂
de l'angle ΔψS et formé par l'axe de l'avion et le cap magnétique d'approche QFU, et
de l'écart angulaire entre l'axe 9 du système de visée et la source 2 d'émission de rayons infrarouges.

Comme précédemment mentionné, les sorties 10 et 11 peuvent être reliées à un directeur de vol 12 de type classique et/ou au pilota automatique 13 de l'hélicoptère 1.

Par ailleurs, le calculateur 6 peut élaborer à partir des informations relatives à l'écart angulaire formé entre l'axe 9 du système de visée et la source d'émission d'infrarouge 2, les signaux de commande de la précession des gyromètres servant à stabiliser le système de visée (bloc 14).

**Revendications**

1. Procédé d'aide au pilotage pour l'approche et l'atterrissage d'un aérodyne en un point (2), et suivant une direction (QFU) et de pente (5) d'atterrissage, ledit aérodyne ayant un axe de propagation (4), caractérisé par le fait qu'il consiste à déterminer, à un moment donné, quand l'aérodyne est à une certaine distance du point d'atterrissage (2) préalablement déterminé par une source infrarouge disposée au sol, dans un premier plan, d'une part, la valeur d'un premier angle (ΔψSET) que font entre elles les projections dans ce plan de la direction de propagation (4) de l'aérodyne, et la projection de la direction d'atterrissage (QFU) et, d'autre part, la valeur d'un second angle (ηLOC) que font les projections dans ce premier plan d'un axe (3) passant constamment par le point d'atterrissage de l'aérodyne, et la direction d'atterrissage (QFU) et, dans un second plan non confondu avec le premier la valeur d'un troisième angle (Σ) que font entre elles les projections dans ce second plan d'axe (3) et une pente prédéterminée d'atterrissage (5) par rapport à un axe horizontal (8), et la valeur d'un quatrième angle (Σ + S + θ) que font entre elles les projections dans ce second plan de la direction de propagation (4) de l'aérodyne, et la direction de la pente prédéterminée (5), et à partir de ce moment, à agir sur les commandes de l'aérodyne pour amener toutes les valeurs respectives desdits premier, second, troisième et quatrième angles à une valeur nulle.

2. Procédé d'aide au pilotage selon la revendication 1, caractérisé par le fait que lesdits premier et second plans sont deux plans respectivement horizontal et vertical.

3. Procédé d'aide au pilotage selon l'une des revendications 1 et 2, caractérisé par le fait que la direction d'atterrissage (QFU) est déterminée par rapport à un cap magnétique.

4. Procédé d'aide au pilotage selon l'une des revendications 1 à 3, caractérisé par le fait que ledit axe (3) passant par l'aérodyne (1) et ledit point (2) est donné par une lunette de visée montée sur l'aérodyne.

5. Procédé d'aide au pilotage selon la revendication 4, caractérisé par le fait que ladite lunette de visée est gyrostabilisée.

**Claims**

1. A method of assisting piloting during the approach and landing of an aircraft at a point (2) and along a landing direction (QFU) and slope (5), the said aircraft having an axis of propagation (4), the method being characterized by the fact that it consists in determining, at a given moment when the aircraft is at a certain distance in a first plane from the landing point (2) as prior determined by an infrared source placed on the ground, firstly the value of a first angle (ΔψSET) between the projections in this plane of the aircraft's direction of propagation (4) and the projection of the landing direction (QFU), and secondly the value of a second angle (ηLOC) between the projections in this first plan of an axis (3) passing continuously through the aircraft landing point and the landing direction (QFU), and, in a second plane different from the first, the value of a third angle (Σ) between the projections in this second plane of the axis (3) and of a predetermined landing slope (5) relative to a horizontal axis (8), and the value of a fourth angle (Σ + S + θ) between the projections in this second plane of the direction of propagation (4) of the aircraft and the direction of the predetermined slope (5), and from this moment acting on the controls of the aircraft to bring the values of the said first, second, third, and fourth angles respectively to a zero value.

2. A method of assisting piloting according to claim 1, characterized by the fact that the said first and second planes are respectively the horizontal plane and a vertical plane.

3. A method of assisting piloting according to claim 1 or 2, characterized by the fact that the landing direction (QFU) is determined relative to a magnetic bearing.

4. A method of assisting piloting according to any one of claims 1 to 3, characterized by the fact that the said axis (3) passing through the aircraft (1) and the said point (2) is given by an aiming sight mounted on the aircraft.

5. A method of assisting piloting according to claim 4, characterized by the fact that the said aiming sight is gyrostabilized.

**Ansprüche**

1. Steuerunterstützungsverfahren für Landeanflug und Landung eines Luftfahrzeugs an einem Punkt (2) in einer Richtung (QFU) und mit einer landeneigung (5), wobei das Luftfahrzeug eine Bewegungsachse (4) besitzt, dadurch gekennzeichnet, daß zu einem gegebenen Zeitpunkt, wenn das Luftfahrzeug einen bestimmten Abstand von dem Landepunkt (2) — vorher festgelegt durch eine am Boden angeordnete Infrarotquelle — besitzt, in einer ersten Ebene einerseits der Wert eines ersten Winkels ($\Delta\psi$SET) bestimmt wird, den die Projektionen auf diese Ebene der Bewegungsrichtung (4) des Luftfahrzeugs und die Projektion der Landerichtung (QFU) miteinander einschließen, und andererseits der Wert eines zweiten Winkels ($\eta$LOC) bestimmt wird, den die Projektionen auf diese erste Ebene einer ständig durch den Landepunkt des Luftfahrzeugs verlaufenden Achse (3) und der Landerichtung (QFU) miteinander einschließen, und in einer zweiten, mit der ersten nicht zusammenfallenden Ebene der Wert eines dritten Winkels ($\epsilon$) bestimmt wird, eingeschlossen von den Projektionen auf diese zweite Ebene der Achse (3) und einer vorgegebenen Landeneigung (5) relativ zu einer Horizontalachse (8), sowie der Wert eines vierten Winkels ($\epsilon + S + \theta$) bestimmt wird, eingeschlossen von den Projektionen auf diese zweite Ebene der Bewegungsrichtung (4) des Luftfahrzeugs und der vorgegebenen Landeneigung (5), und daß von diesem gegebenen Zeitpunkt an auf die Steuerungen des Luftfahrzeugs eingewirkt wird, um alle Werte der genannten ersten, zweiten, dritten und vierten Winkel auf einen Wert Null zu bringen.

2. Steuerunterstützungsverfahren nach Anspruch 1, dadurch gekennzeichnet, daß die erste und die zweite Ebene eine Horizontalebene bzw. eine Vertikalebene sind.

3. Steuerunterstützungsverfahren nach Anspruch 1 und 2, dadurch gekennzeichnet, daß die Landerichtung (QFU) relativ zu einem Magnetkurs festgelegt wird.

4. Steuerunterstützungsverfahren nach einem der Ansprüche von 1 bis 3, dadurch gekennzeichnet, daß die genannte, durch das Luftfahrzeug (1) verlaufende Achse (3) und der Landepunkt (2) durch ein im Luftfahrzeug angeordnetes Zielfernrohr gegeben ist.

5. Steuerunterstützungsverfahren nach Anspruch 4, dadurch gekennzeichnet, daß das Zielfernrohr kreiselstabilisiert wird.

Fig.1

Fig. 2

# Fig. 3

ECART
SOURCE
LIGNE DE VISEE

Q FU   $\triangle$GISEMENT L

$\theta$

$\Delta\Psi$ SET

6

10

11

DIRECTEUR
DE VOL — 12

PILOTE
AUTOMAT. — 13

COMMANDE
PRECESSION
GYROMETRES